# EUROPEAN PATENT APPLICATION

(11) **EP 4 717 675 A2**
(43) Date of publication of application: **01.04.2026**
(21) Application number: 25204439.1
(22) Date of filing: 24.09.2025
(51) Int. Cl.: C01G 53/40, C01G 53/506, H01M 4/525, H01M 10/052, H01M 10/0525

(54) **METAL OXIDE PRECURSOR PARTICLE, METHOD FOR PREPARING THE SAME AND METHOD FOR PREPARING CATHODE ACTIVE MATERIAL**

(30) Priority: 30.09.2024 KR 20240132834; 12.09.2025 KR 20250130961
(71) Applicant: SK On Co., Ltd., Seoul 03161 (KR)
(72) Inventor: KWEON, Hee Jun, 34124 Daejeon (KR); JANG, Ji Hye, 34124 Daejeon (KR); CHOI, Ji Hoon, 34124 Daejeon (KR)
(74) Representative: Prüfer & Partner mbB Patentanwälte · Rechtsanwälte

(57) **Abstract**

A metal oxide precursor particle according to the present disclosure has a hollow structure, includes nickel, cobalt and manganese, and has a median particle diameter of 20 µm to 40 µm. According to a method for preparing metal oxide precursor particles according to the present disclosure, a mixed solution containing water and a metal source including a nickel source, a cobalt source and a manganese source is prepared. The mixed solution is sprayed into a quartz tube. The quartz tube includes a particle formation region therein, and the temperature of the particle formation region is set to 750 °C to 1100 °C. According to a method for preparing a cathode active material of the present disclosure, the metal oxide precursor particles are pulverized to prepare small-sized metal oxide precursor particles. A mixture including the small-sized metal oxide precursor particles and a lithium source is calcined to prepare lithium metal oxide particles.

## Description

### [BACKGROUND OF THE INVENTION]

### 1. Field of the Invention

The present disclosure relates to metal oxide precursor particles, a method for preparing the same, and a method for preparing a cathode active material.

### 2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as a hybrid vehicle as a power source thereof.

Examples of the secondary batteries may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design, such that development thereof is progressing in this regard.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

It is desirable for a lithium secondary battery to have a high capacity and to maintain operational and storage stability under extremely high or low temperature environments. Therefore, the development of a cathode capable of achieving a high-capacity and high-stability lithium secondary battery is required.

### [SUMMARY OF THE INVENTION]

An object of the present disclosure is to provide metal oxide precursor particles capable of achieving a battery with improved electrochemical performance.

Another object of the present disclosure is to provide a method for preparing metal oxide precursor particles.

Still another object of the present disclosure is to provide a method for preparing a cathode active material using the metal oxide precursor particles.

A metal oxide precursor particle according to the present disclosure has a hollow structure, includes nickel, cobalt and manganese, and has a median particle diameter of 20 µm to 40 µm.

According to exemplary embodiments, the metal oxide precursor particle may have a median particle diameter of 25 µm to 35 µm.

According to exemplary embodiments, the hollow structure may include a core that is a void and a shell surrounding an outer surface of the core. The shell may have an average thickness of 1 µm to 5 µm.

According to exemplary embodiments, the shell may surround 90% or more of the area of the outer surface of the core.

According to exemplary embodiments, the particle may include a crystal structure represented by Formula 1 below:

[Formula 1] Ni_{1-x-y-z}CoₓMn_{y}M_{z}O₂₊ₐ

In Formula 1, 0<x≤0.1, 0<y≤0.2, 0≤z≤0.1, 0.5≤1-x-y-z<1, and -0.1≤a≤0.1, M may include at least one selected from the group consisting of B, Na, Mg, Ca, Ti, V, Cr, Cu, Zn, Ga, Ge, Sr, Y, Ag, Ba, Zr, Nb, Mo, Al, W, Ru, Sn, Ta, La and Ce.

According to exemplary embodiments, the particle may further include lithium.

According to exemplary embodiments, the particle may include a crystal structure represented by Formula 2 below:

[Formula 2] Li_{1+b}Ni_{1-x-y-z}CoₓMn_{y}M_{z}O₂₊ₐ

In Formula 2, 0<x≤0.1, 0<y≤0.2, 0≤z≤0.1, 0.5≤1-x-y-z<1, and -0.1≤a≤0.1, -0.5 ≤b≤0.5, M may include at least one selected from the group consisting of B, Na, Mg, Ca, Ti, V, Cr, Cu, Zn, Ga, Ge, Sr, Y, Ag, Ba, Zr, Nb, Mo, Al, W, Ru, Sn, Ta, La and Ce.

In a method for preparing metal oxide precursor particles according to the present disclosure, a mixed solution including water and a metal source including a nickel source, a cobalt source and a manganese source is prepared. The mixed solution is sprayed into a quartz tube. The quartz tube includes a particle formation region therein, and the temperature of the particle formation region is 750 °C to 1100 °C.

According to exemplary embodiments, the concentration of the metal source in the mixed solution may be 0.5 M to 4 M.

According to exemplary embodiments, the temperature of the particle formation region may be 800 °C to 1000 °C.

According to exemplary embodiments, the spraying may be performed at a flow rate of the mixed solution of 30 ml/min to 150 ml/min.

According to exemplary embodiments, the metal source in the mixed solution may further include a lithium source.

According to exemplary embodiments, the mixed solution may further include a chelating agent or a basic compound.

**In** a method for preparing a cathode active material according to the present disclosure, metal oxide precursor particles having a hollow structure, including nickel, cobalt and manganese, and having a median particle diameter of 20 µm to 40 µm are pulverized to prepare small-particle metal oxide precursor particles. A mixture including the small-particle metal oxide precursor particles and a lithium source is calcined to prepare lithium metal oxide particles.

According to exemplary embodiments, the small-sized metal oxide precursor particles may have a median particle diameter of 1 µm to 10 µm.

According to exemplary embodiments, the calcination may be performed at a temperature of 700 °C to 1000 °C.

According to exemplary embodiments, the lithium metal oxide particles have a single-particle structure.

A cathode active material having high capacity and charge-discharge efficiency may be implemented from the metal oxide precursor particles according to exemplary embodiments of the present disclosure.

**In** accordance with the method for preparing metal oxide precursor particles according to exemplary embodiments of the present disclosure, the metal oxide precursor particles may be prepared rapidly and efficiently.

In accordance with the method for preparing a cathode active material according to exemplary embodiments of the present disclosure, a cathode active material having a stable single-particle structure may be provided.

The metal oxide precursor particles of the present disclosure, the method for manufacturing the same, and the method for manufacturing the cathode active material may be widely applied in green technology fields, such as electric vehicles, battery charging stations, as well as solar power generation, wind power generation, and the like, which use the batteries. In addition, the metal oxide precursor particles of the present disclosure, the method for manufacturing the same, and the method for manufacturing the cathode active material may be used in eco-friendly electric vehicles, hybrid vehicles, and the like, which are aimed at mitigating climate change by reducing air pollution and greenhouse gas emissions.

### [BRIEF DESCRIPTION OF THE DRAWINGS]

The above and other objects, features and other advantages of the present disclosure will be more clearly understood from the following detailed description taken in conjunction with the accompanying drawings, in which:
FIGS. 1 and 2 are schematic plan and cross-sectional views, respectively, of a lithium secondary battery according to exemplary embodiments;
FIG. 3 is a scanning electron microscope (SEM) image of a metal oxide precursor particle of Example 1;
FIG. 4 is a cross-sectional SEM image of a metal oxide precursor particle of Example 4; and
FIGS. 5 to 7 are SEM images of pulverized small-diameter metal oxide precursor particles of Examples 4 and 7, and Comparative Example 1, respectively.

### [DETAILED DESCRIPTION OF THE INVENTION]

The present disclosure provides metal oxide precursor particles having a hollow structure. In addition, the present disclosure provides a method for preparing the metal oxide precursor particles and a method for preparing a cathode active material using the metal oxide precursor particles.

The metal oxide precursor particles (hereinafter, also abbreviated as precursor particles) according to the present disclosure have a hollow structure. The hollow structure may be formed by the preparation process of the metal oxide precursor particles described below.

According to exemplary embodiments, the hollow structure may include a core, which is a void, and a shell surrounding the outer surface of the core. For example, the shell may entirely surround the outer surface of the core.

According to exemplary embodiments, the shell may surround at least 90% of the area of the outer surface of the core. According to some embodiments, the shell may surround at least 95% of the area of the outer surface of the core. For example, the shell may include a hole that connects the core and the exterior of the precursor particle. The hole may correspond to a region of the outer surface of the core that is not surrounded by the shell.

According to exemplary embodiments, the shell may have an average thickness of 1 µm to 5 µm. According to some embodiments, the shell may have an average thickness of 1.5 µm to 4.5 µm or 1.6 µm to 4 µm.

Within the above range, the productivity of the metal oxide precursor particles may be improved, and the process of pulverizing for the preparation of the cathode active material described below may be performed more rapidly.

According to exemplary embodiments, the average shell thickness may be measured from a cross-sectional image of the metal oxide precursor particle. For example, a scanning electron microscope (SEM) image of a cross-section of the metal oxide precursor particle may be captured using the S4800 instrument from Hitachi. The shell thickness may be measured from the obtained SEM image. From the SEM image of the cross-section of the metal oxide precursor particle, the thicknesses of four points of the shell cross-section may be measured, and the average shell thickness of the metal oxide precursor particle may be calculated as the average of these values.

The average shell thickness may be the average of the shell thicknesses measured at multiple points on a single metal oxide precursor particle.

According to exemplary embodiments, the average shell thickness may be 10% to 30% of the radius of the metal oxide precursor particle. According to some embodiments, the average shell thickness may be 12% to 27% of the radius of the metal oxide precursor particle.

The metal oxide precursor particles may have a median particle diameter of 20 µm to 40 µm. According to exemplary embodiments, the metal oxide precursor particles may have a median particle diameter of 25 µm to 35 µm.

Within the above range, a cathode active material having high capacity and improved cycle life properties may be obtained.

If the median particle diameter of the metal oxide precursor particles is less than 20 µm, the charge-discharge efficiency of the cathode including the cathode active material prepared from the metal oxide precursor particles may be degraded.

If the median particle diameter of the metal oxide precursor particles exceeds 40 µm, the electrical conductivity may be reduced, resulting in inferior cycle life properties.

The "median particle diameter (D50)" may refer to a particle diameter value at which 50% of the volume-based cumulative distribution is reached. The volume-based cumulative distribution of the particles may be obtained using a laser diffraction scattering method.

The metal oxide precursor particles include nickel, cobalt and manganese. In exemplary embodiments, the metal oxide precursor particles may further include one or more additional metals in addition to nickel, cobalt and manganese.

The content of nickel, based on the total moles of nickel, cobalt and manganese in the metal oxide precursor particles, may be 50 mol% or more. In some embodiments, the nickel content may be 60 mol% or more, 70 mol% or more, 80 mol% or more, or 90 mol% or more, based on the total moles of nickel, cobalt and manganese in the metal oxide precursor particles.

Within the above range, the capacity of the cathode active material prepared from the metal oxide precursor particles may be further enhanced.

According to exemplary embodiments, the metal oxide precursor particles may include a crystal structure represented by Formula 1 below. For example, the metal oxide precursor particles may have a composition represented by Formula 1 below.

[Formula 1] Ni _{1-x-y-z}CoₓMn_{y}M_{z}O₂₊ₐ

In Formula 1, x, y, z and a may satisfy 0<x≤0.1, 0<y≤0.2, 0≤z≤0.1, 0.5≤1-x-y-z<1, and -0.1≤a≤0.1, M may include at least one selected from the group consisting of B, Na, Mg, Ca, Ti, V, Cr, Cu, Zn, Ga, Ge, Sr, Y, Ag, Ba, Zr, Nb, Mo, Al, W, Ru, Sn, Ta, La and Ce.

For example, x may be in the range of 0<x≤0.08 or 0<x≤0.05.

For example, y may be in the range of 0<y≤0.15, 0<y≤0.1, or 0<y≤0.05.

For example, x, y and a may satisfy 0.6≤1-x-y-z<1 or 0.7≤1-x-y-z<1 or 0.8≤1-x-y-z<1 or 0.9≤1-x-y-z<1.

According to exemplary embodiments, the particle may further include lithium.

According to exemplary embodiments, the particle may include a crystal structure represented by Formula 2 below:

[Formula 2] Li_{1+b}Ni_{1-x-y-z}CoₓMn_{y}M_{z}O₂₊ₐ

In Formula 2, 0<x≤0.1, 0<y≤0.2, 0≤z≤0.1, 0.5≤1-x-y-z<1, and -0.1≤a≤0.1, -0.5≤b≤0.5, M may include at least one selected from the group consisting of B, Na, Mg, Ca, Ti, V, Cr, Cu, Zn, Ga, Ge, Sr, Y, Ag, Ba, Zr, Nb, Mo, Al, W, Ru, Sn, Ta, La and Ce.

According to a method for preparing metal oxide precursor particles of the present disclosure, a mixed solution containing water and a metal source including a nickel source, a cobalt source and a manganese source is prepared. The mixed solution is a solution in which the metal source is dissolved in water, and may serve as a precursor solution for preparing the precursor particles.

The metal source may further include a lithium source. When the lithium source is further included as the metal source, a separate lithium source may not be introduced during calcination of the precursor particles.

The lithium source, the nickel source, cobalt source, and/or manganese source may each include a metal nitrate, a metal sulfate, a metal carbonate or the like. For example, the lithium source may be lithium nitrate, the nickel source may be nickel nitrate, the cobalt source may be cobalt nitrate, and the manganese source may be manganese nitrate.

The lithium source, the nickel source, the cobalt source and the manganese source may be included in the mixed solution by adjusting their molar ratios so as to satisfy the composition of Formula 1. For example, the molar ratio of the nickel source based on the total moles of the metal sources may be 50 mol% or more, 60% or more, 70 mol% or more, 80 mol% or more, or 90 mol% or more.

According to exemplary embodiments, the concentration of the metal source in the mixed solution may be 0.5 M to 4 M. According to some embodiments, the concentration of the metal source in the mixed solution may be 1 M to 3 M.

Within the above range, the mixed solution may have an appropriate viscosity, and droplets may be sprayed in a uniform shape during the spraying process described below.

According to exemplary embodiments, the mixed solution may further include a chelating agent or a basic compound.

The chelating agent may be, for example, an organic compound having at least one carboxyl group, and may include carboxylic acid, oxalic acid, ethylenediaminetetraacetic acid, citric acid, acetic acid, succinic acid, malonic acid, malic acid, propionic acid, tartaric acid, lactic acid, pyruvic acid, fumaric acid and the like. These may be used alone or in combination of two or more thereof.

The content of the chelating agent may be 0.01% by weight ("wt%") to 3 wt%, or 0.05 wt% to 1 wt% based on the total weight of the mixed solution.

The basic compound may include, for example, NH₄OH, (NH₄)₂SO₄, NH₄NO₃, NH₄Cl, CH₃COONH₄, NH₄CO₃, NaOH, KOH, Ca(OH)₂, and the like. These may be used alone or in combination of two or more thereof.

The content of the basic compound may be 0.01 wt% to 3 wt% or 0.05 wt% to 1 wt% based on the total weight of the mixed solution.

Next, the mixed solution is sprayed into a quartz tube. A heat source may be provided outside the quartz tube, and thus the interior of the quartz tube may be heated. During the solvent evaporation process of the mixed solution sprayed into the quartz tube, hollow-structured metal oxide precursor particles may be formed.

There may be two or more temperature-gradient regions inside the quartz tube. For example, temperature-gradient regions may be formed along the longitudinal direction of the quartz tube. For example, the mixed solution may be sprayed at one end of the quartz tube, and metal oxide precursor particles may be collected at the opposite end.

According to some embodiments, there may be three or more temperature-gradient regions inside the quartz tube. At least one region among the regions located between the region adjacent to one end and the region adjacent to the opposite end may serve as a particle formation region. The interior of the quartz tube includes the particle formation region, and the metal oxide precursor particles may be formed within the particle formation region.

The temperature of the particle formation region may be higher than that of the other regions. Accordingly, the solvent may rapidly evaporate at the highest temperature, thereby forming hollow-structured metal oxide precursor particles.

The temperature of the particle formation region may be 750 °C to 1100 °C. According to some embodiments, the temperature of the particle formation region may be 800 °C to 1000 °C.

Within the above range, metal oxide precursor particles having an appropriate particle diameter and shell thickness may be prepared.

If the temperature of the particle formation region is less than 750 °C, the size of the metal oxide precursor particles prepared may be excessively small.

If the temperature of the particle formation region exceeds 1100 °C, the size of the metal oxide precursor particles produced may be excessively large.

According to exemplary embodiments, the spraying may be performed using an ultrasonic nebulizer, but it is not limited thereto.

According to exemplary embodiments, the spraying may be performed at a flow rate of the mixed solution of 30 ml/min to 150 ml/min. According to some embodiments, the spraying may be performed at a flow rate of the mixed solution ranging from 50 ml/min to 100 ml/min.

Within the above range, the metal oxide precursor particles may be prepared at an appropriate production rate while preventing agglomeration of particles inside the quartz tube.

When the mixed solution is sprayed, the mixed solution may be atomized into fine droplets. In this case, water may rapidly evaporate from the outer surface of the droplets inside the high-temperature quartz tube, resulting in a sharp increase in the metal source concentration at the droplet surfaces. By the principle of osmosis, the mixed solution at the center of the droplet may migrate toward the outer surface of the droplet, thereby forming a cavity (void) in the center. Water may also evaporate from the migrated mixed solution at the droplet surface, and at high temperatures, the metal sources at the droplet surface may react to form metal oxides, thereby forming hollow-structured metal oxide precursor particles.

Along with the spraying of the mixed solution, a carrier gas may be injected into the quartz tube. The carrier gas may transport the metal oxide precursor particles formed inside the quartz tube to the opposite end, thereby allowing the metal oxide precursor particles to be collected.

The carrier gas may be an inert gas, such as nitrogen (N₂), argon (Ar), or helium (He).

According to the method for preparing a cathode active material of the present disclosure, the metal oxide precursor particles may be pulverized to prepare small-sized metal oxide precursor particles.

The pulverization may be, for example, dry pulverization or wet pulverization. For example, the metal oxide precursor particles may be pulverized by ball milling, or pulverized together with water.

According to exemplary embodiments, the small-sized metal oxide precursor particles may have a median particle diameter of 1 µm to 10 µm. According to some exemplary embodiments, the small-sized metal oxide precursor particles may have a median particle diameter of 2 µm to 5 µm.

Within the above range, the crystal grain size of the cathode active material to be prepared may be increased, and a cathode active material having a single-particle structure may be obtained.

A mixture including the small-sized metal oxide precursor particles and a lithium source is calcined to prepare lithium metal oxide particles.

A mixture may be prepared by mixing lithium hydroxide and the small-sized metal oxide precursor particles so that the molar ratio of lithium to the total moles of metals contained in the precursor particles is 0.5:1 to 1.8:1. In some embodiments, a mixture may be prepared by mixing lithium hydroxide and the small-sized metal oxide precursor particles so that the molar ratio of lithium to the total moles of metals contained in the precursor particles is 0.8:1 to 1.5:1. In some embodiments, a mixture may be prepared by mixing lithium hydroxide and the small-sized metal oxide precursor particles so that the molar ratio of lithium to the total moles of metals contained in the precursor particles is 0.5:1 to 1.5:1. In some embodiments, a mixture may be prepared by mixing lithium hydroxide and the small-sized metal oxide precursor particles so that the molar ratio of lithium to the total moles of metals contained in the precursor particles is 0.8:1 to 1.8:1

The mixture may be calcined to prepare lithium metal oxide particles. According to exemplary embodiments, the calcination may be performed at a temperature of 700 °C to 1000 °C. According to some embodiments, the calcination may be performed at a temperature of 800 °C to 900 °C. Within the above range, a cathode active material having a single-particle structure with high stability may be prepared.

According to exemplary embodiments, the lithium metal oxide particles may have a single-particle structure. The term "single-particle structure" as used herein refers to a structure that excludes, for example, a secondary particle formed by aggregation or assembly of a plurality of primary particles (e.g., greater than 10) into a substantially single particle.

For example, the lithium metal oxide particles may be composed of particles having a substantially single-particle form, and a secondary-particle structure in which primary particles are assembled or aggregated may be excluded. In addition, the term "single-particle structure" as used herein does not exclude a monolithic form in which 2 to 10 single particles are attached or closely contacted.

In some embodiments, the lithium metal oxide particles may include a structure in which a plurality of primary particles are integrally merged and converted into a substantially single-particle form.

For example, the lithium metal oxide particles may have a single-particle structure including 10 or fewer crystal grains.

For example, the lithium metal oxide particles may have a single crystal structure. The term "single crystal structure" may refer to a structure in which one particle is composed of a single crystal grain. For example, the single crystal structure may be identified based on an ion image obtained by analyzing a particle cross-section using a focused ion beam (FIB). If the particle has a single crystal structure, a single crystal may be observed in the FIB analysis image depending on the difference in crystal orientation.

According to exemplary embodiments, the lithium metal oxide particles may include a crystal structure represented by Formula 3 below.

[Formula 3] Li_{1+b}Ni_{1-x-y-z}CoₓMn_{y}M_{z}O₂₊ₐ

In Formula 3, x, y, z, a and b may satisfy 0<x≤0.1, 0<y≤0.2, 0≤z≤0.1, 0.5≤1-x-y-z<1, - 0.1≤a≤0.1, and -0.5≤b≤0.5, M may include at least one selected from the group consisting of B, Na, Mg, Ca, Ti, V, Cr, Cu, Zn, Ga, Ge, Sr, Y, Ag, Ba, Zr, Nb, Mo, Al, W, Ru, Sn, Ta, La and Ce.

In Formula 3, M may function as an auxiliary element. The auxiliary element may be incorporated into a layered structure/crystal structure together with the main active elements to form bonds. In addition, the auxiliary element may be added to the main active elements such as nickel, cobalt and manganese to enhance the chemical stability of the cathode active material or the layered structure/crystal structure.

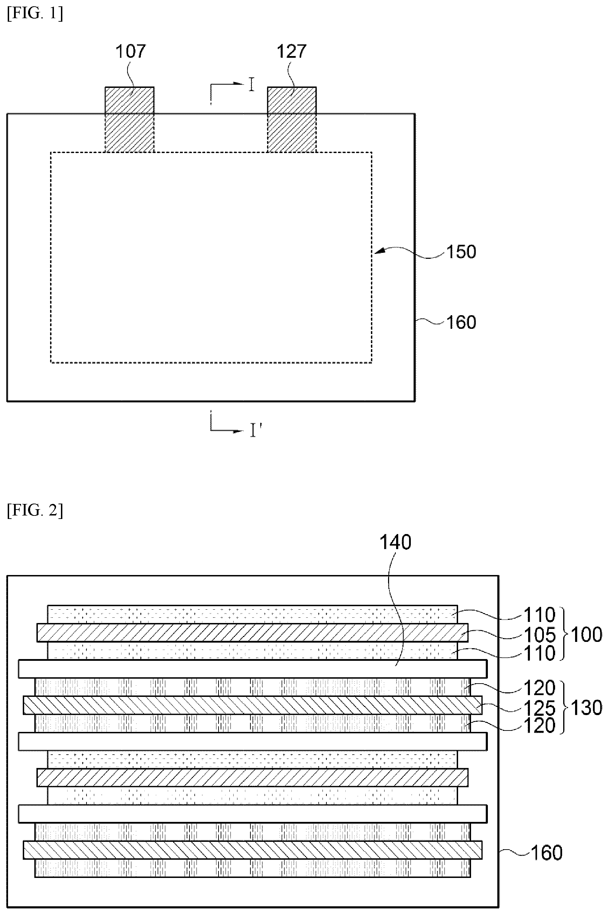

FIGS. 1 and 2 are schematic plan and cross-sectional views, respectively, illustrating a lithium secondary battery according to exemplary embodiments. Specifically, FIG. 2 is a cross-sectional view taken along line I-I' of FIG. 1 in the thickness direction of the lithium secondary battery.

Referring to FIGS. 1 and 2, the lithium secondary battery may include an electrode assembly 150 accommodated within a case 160. The electrode assembly 150 may include cathodes 100, anodes 130 and separation membranes 140, which are repeatedly stacked, as shown in FIG. 2.

The cathode 100 includes a cathode current collector 105 and a cathode active material layer 110 disposed on at least one surface of the cathode current collector 105.

The cathode current collector 105 may include stainless steel, nickel, aluminum, titanium, or an alloy thereof. The cathode current collector 105 may also include aluminum or stainless steel having a surface treated with carbon, nickel, titanium or silver. The cathode current collector 105 may have a thickness of 10 to 50 µm, but is not particularly limited thereto.

The cathode active material layer 110 may be disposed on both surfaces of the cathode current collector 105.

The cathode active material layer 110 may include a cathode active material. The cathode active material may include the above-described lithium metal oxide.

The cathode active material may further include another cathode active material in addition to the lithium metal oxide. For example, the cathode active material may further include a lithium cobalt oxide-based active material, a lithium manganese oxide-based active material, or a lithium iron phosphate (LFP)-based active material (e.g., LiFePO₄), and may also include a lithium metal oxide that does not have a single-particle structure (e.g., a secondary-particle structure).

The cathode active material layer may further include a conductive material. The conductive material compensates for the reduction in electrical conductivity of the cathode active material layer caused by a binder.

The conductive material may include, for example, carbon-based conductive materials such as graphite, carbon black, acetylene black, Ketjen black, graphene, carbon nanotubes, vapor-grown carbon fibers (VGCFs), carbon fibers, and/or metal-based conductive materials, including perovskite materials, such as tin, tin oxide, titanium oxide, LaSrCoO₃, and LaSrMnO₃, but is not limited thereto.

The content of the conductive material based on the total weight of the cathode active material layer may be 0.01 wt% to 3 wt%. In some embodiments, the content of the conductive material based on the total weight of the cathode active material layer may be 0.1 wt% to 1 wt%.

The cathode active material layer may further include a binder. The binder may bind the cathode active material and the conductive material, and may enhance the adhesion between the cathode active material layer and the cathode current collector.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. **In** this case, an amount of the binder for forming the cathode active material layer may be reduced and an amount of the cathode active material may be relatively increased, thereby improving the output and capacity of the secondary battery.

The content of the binder may be 0.5 wt% to 5 wt% based on the total weight of the cathode active material layer. **In** some embodiments, the content of the binder may be 1 wt% to 3 wt% based on the total weight of the cathode active material layer.

The cathode active material layer may further include a thickener and/or a dispersant. For example, the cathode active material layer may include a thickener such as carboxymethyl cellulose (CMC).

The cathode active material layer 110 may be formed from a cathode slurry composition including a cathode active material and a binder. For example, the cathode active material layer 110 may be prepared by applying the cathode slurry composition including a cathode active material and a binder to one surface of the cathode current collector 105, and then drying and roll-pressing the applied layer.

According to exemplary embodiments, the cathode slurry may include a solvent. As the solvent, N-methyl-2-pyrrolidone (NMP), dimethylformamide, dimethylacetamide, N,N-dimethylaminopropylamine, ethylene oxide, tetrahydrofuran, and the like may be used.

The application of the cathode slurry may be performed using methods such as gravure coating, slot die coating, simultaneous multilayer die coating, imprinting, doctor blade coating, dip coating, bar coating or casting, etc., but is not limited thereto.

According to exemplary embodiments, the cathode active material layer but may have thickness of, for example, 10 µm to 200 µm, but is not particularly limited thereto.

According to some embodiments, the cathode active material layer may include two or more layers including different types of cathode active materials, conductive materials, and/or binders. For example, the cathode active material layer may include a first cathode active material layer and a second cathode active material layer, and the type and/or content of the active material, conductive material, and/or binder in the first cathode active material layer may be different from the type and/or content of the active material, conductive material, and/or binder in the second cathode active material layer.

The anode 130 may include an anode current collector 125 and an anode active material layer 120, which is formed by coating an anode active material on the anode current collector 125.

The anode active material may include a material capable of intercalating and deintercalating lithium ions. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at 1500°C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicon, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing the anode active material with a binder, a conductive material and/or a dispersant in a solvent, followed by stirring the mixture. The slurry may be coated on at least one surface of the anode current collector 125, followed by drying and compression to prepare the anode 130.

As the binder and the conductive material, materials which are substantially the same as or similar to the above-described materials used in the cathode active material layer 110 may be used. In some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

In some embodiments, the anode 130 may have an area (e.g., a contact area with the separation membrane 140) and/or volume larger than those/that of the cathode 100. Thereby, lithium ions generated from the cathode 100 may be smoothly diffused to the anode 130 without being precipitated during the process, for example. Therefore, effects of simultaneously improving output and stability through a combination of the above-described first cathode active material layer and the second cathode active material layer may be more easily implemented.

According to exemplary embodiments, an electrode cell is defined by the cathode 100, the anode 130, and the separation membrane 140, and a plurality of electrode cells are stacked to form, for example, a jelly roll type electrode assembly 150. For example, the electrode assembly 150 may be formed by winding, stacking, or folding the separation membrane 140.

The electrode assembly 150 may be accommodated in the case 160 together with an electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethylsulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

As shown in FIG. FIG. 1, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) that extend or are exposed to an outside of the outer case 160.

FIG. 1 shows that the cathode lead 107 and the anode lead 127 protrude from an upper side of the outer case 160 in a planar direction, but positions of the electrode leads are not limited thereto. For example, the electrode leads may protrude from at least one of both sides of the outer case 160, or may protrude from a lower side of the outer case 160. Alternatively, the cathode lead 107 and the anode lead 127 may be formed so as to protrude from different sides of the outer case 160, respectively.

The lithium secondary battery may be manufactured, for example, in a cylindrical shape using a can, a prismatic shape, a pouch shape or a coin shape.

The invention is also defined by the following aspects:
Aspect 1. A metal oxide precursor particle having a hollow structure, comprising nickel, cobalt and manganese, and having a median particle diameter of 20 µm to 40 µm.
Aspect 2. The metal oxide precursor particle according to aspect 1, wherein the median particle diameter is 25 µm to 35 µm.
Aspect 3. The metal oxide precursor particle according to any one of aspect 1 and 2, wherein the hollow structure comprises a core that is a void and a shell surrounding an outer surface of the core, and
   wherein the shell has an average thickness of 1 µm to 5 µm.
Aspect 4. The metal oxide precursor particle according to aspect 3, wherein the shell surrounds 90% or more of the area of the outer surface of the core.
Aspect 5. The metal oxide precursor particle according to any one of aspect 1 to 4, wherein the particle includes a crystal structure represented by Formula 1 below:

   [Formula 1] Ni_{1-x-y-z}CoₓMn_{y}M_{z}O₂₊ₐ

   (in Formula 1, 0<x≤0.1, 0<y≤0.2, 0≤z≤0.1, 0.5≤1-x-y-z<1, and -0.1≤a≤0.1, M comprises at least one selected from the group consisting of B, Na, Mg, Ca, Ti, V, Cr, Cu, Zn, Ga, Ge, Sr, Y, Ag, Ba, Zr, Nb, Mo, Al, W, Ru, Sn, Ta, La and C).
Aspect 6. The metal oxide precursor particle according to any one of aspect 1 to 5, wherein the particle may further include lithium.
Aspect 7. A method for preparing metal oxide precursor particles comprising:
   preparing a mixed solution including water and a metal source comprising a nickel source, a cobalt source and a manganese source; and
   spraying the mixed solution into a quartz tube,
   wherein the quartz tube comprises a particle formation region therein, and
   the temperature of the particle formation region is 750 °C to 1100 °C, preferably 800 °C to 1000 °C.
Aspect 8. The method for preparing metal oxide precursor particles according to aspect 7, wherein the concentration of the metal source in the mixed solution is 0.5 M to 4 M.
Aspect 9. The method for preparing metal oxide precursor particles according to any one of aspect 7 and 8, wherein the spraying is performed at a flow rate of the mixed solution of 30 ml/min to 150 ml/min.
Aspect 10. The method for preparing metal oxide precursor particles according to any one of aspect 7 to 9, wherein the metal source in the mixed solution may further include a lithium source.
Aspect 11. The method for preparing metal oxide precursor particles according to any one of aspect 7 to 10, wherein the mixed solution further comprises a chelating agent or a basic compound.
Aspect 12. A method for preparing a cathode active material comprising:
   pulverizing metal oxide precursor particles having a hollow structure, comprising nickel, cobalt and manganese, and having a median particle diameter of 20 µm to 40 µm to prepare small-particle metal oxide precursor particles; and
   calcining a mixture comprising the small-particle metal oxide precursor particles and a lithium source to prepare lithium metal oxide particles.
Aspect 13. The method for preparing a cathode active material according to aspect 12, wherein the small-sized metal oxide precursor particles have a median particle diameter of 1 µm to 10 µm.
Aspect 14. The method for preparing a cathode active material according to any one of aspect 12 and 13, wherein the calcination is performed at a temperature of 700 °C to 1000 °C.
Aspect 15. The method for preparing a cathode active material according to any one of aspect 13 to 14, wherein the lithium metal oxide particles have a single-particle structure.

### Example 1

A mixed solution was prepared by mixing a metal source including nickel nitrate, cobalt nitrate and manganese nitrate in a molar ratio of 90:5:5 with water to achieve a concentration of 1 M. The mixed solution was sprayed into a quartz tube at a flow rate of 50 ml/min using an ultrasonic atomizer. Argon gas, used as a carrier gas, was also injected into the quartz tube at a flow rate of 6 L/min. The interior of the quartz tube sequentially included first to fifth regions in the longitudinal direction from the ultrasonic atomizer, and the temperatures of the first region and the fifth region were between 50 °C and 100 °C, the temperatures of the second region and the fourth region were between 200 °C and 600 °C, and the temperature of the third region was 800 °C. Metal oxide precursor particles were formed in the third region, and metal oxide precursor particles were collected at the end of the fifth region.

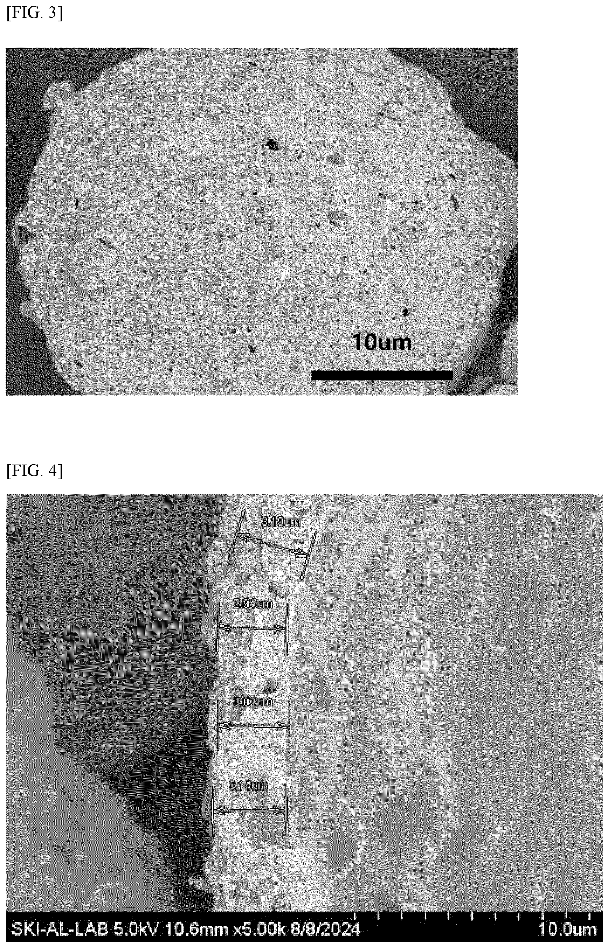

FIG. 3 shows a scanning electron microscope (SEM) image of a metal oxide precursor particle of Example 1.

Referring to FIG. 3, the metal oxide precursor particle of Example 1 has a hollow structure and includes a shell that entirely surrounds the core, which is a void.

### Example 2

Metal oxide precursor particles were prepared in the same manner as in Example 1, except that the temperature of the third region of the quartz tube was set to 900 °C.

### Example 3

Metal oxide precursor particles were prepared in the same manner as in Example 1, except that the temperature of the third region of the quartz tube was set to 1000 °C.

### Example 4

Metal oxide precursor particles were prepared in the same manner as in Example 3, except that the concentration of the metal source in the mixed solution was set to 2 M.

### Example 5

Metal oxide precursor particles were prepared in the same manner as in Example 3, except that the mixed solution was sprayed at a flow rate of 100 ml/min.

### Example 6

Metal oxide precursor particles were manufactured in the same manner as Example 4, except that the flow rate of the mixed solution was sprayed at a flow rate of 100 ml/min.

### Example 7

Metal oxide precursor particles were manufactured in the same manner as Example 4, except that the metal source concentration in the mixed solution was set to 3 M.

### Example 8

Metal oxide precursor particles were manufactured in the same manner as Example 1, except using a metal source including nickel nitrate, cobalt nitrate and manganese nitrate in a molar ratio of 60:10:30

### Example 9

Metal oxide precursor particles were manufactured in the same manner as Example 1, except using a metal source including lithium nitrate, nickel nitrate, cobalt nitrate and manganese nitrate in a molar ratio of 103:90:5:5

### Comparative Example 1

Metal oxide precursor particles were manufactured in the same manner as Example 1, except that the temperature of the third region of the quartz tube was set to 700 °C.

### Comparative Example 2

Metal oxide precursor particles were manufactured in the same manner as Example 1, except that the metal source concentration in the mixed solution was set to 3 M and the temperature of the third region of the quartz tube was set to 1200 °C.

### Measurement Example: Measurement of specifications of metal oxide precursor particles

The median particle diameter and average thickness of the metal oxide precursor particles of the examples and comparative examples were measured using the following method.

### (1) Median particle diameter

Using the Microtrac S3500 bluewave, a laser diffraction-scattering particle size distribution analyzer, the volume-based cumulative distribution according to particle diameter was analyzed using a 1x Red 780 nm / 2x Blue 405 nm laser in the range of 0.01 µm to 2,800 µm, under a transmittance condition of 100% (transparent). The median particle diameter (D50) of the metal oxide precursor particles in the examples and comparative examples was measured from the resulting volume-based cumulative distribution.

### (2) Average shell thickness

SEM images of the particle cross-section were obtained using the S4800 instrument from Hitachi. Then, the shell thickness of the metal oxide precursor particles in the examples and comparative examples was measured at four points on each particle, and the average of the measured values was calculated as the average shell thickness.

FIG. 4 shows a cross-sectional SEM image of a metal oxide precursor particle of Example 4.

As shown in FIG. 4, the shell thickness was measured at four points from the cross-sectional SEM image of the particle, and the average shell thickness was calculated as the average of these values.

The concentration and flow rate of the mixed solution, the temperature of the third region in the quartz tube, the median particle diameter of the metal oxide precursor particles, and the average shell thickness of the examples and comparative examples are shown in Table 1 below.

**[TABLE 1]**

| | Mixed solution | | Quartz tube third region temperature (°C) | Metal oxide precursor particles (µm) | |
|---|---|---|---|---|---|
| | Capacity (ml/min) | Metal source concentration (M) | | Median particle diameter | Shell average thickness |
| Example 1 | 50 | 1 | 800 | 25 | 2 |
| Example 2 | 50 | 1 | 900 | 30 | 2 |
| Example 3 | 50 | 1 | 1000 | 34 | 2 |
| Example 4 | 50 | 2 | 1000 | 30 | 3 |
| Example 5 | 100 | 1 | 1000 | 21 | 1.6 |
| Example 6 | 100 | 2 | 1000 | 28 | 2.7 |
| Example 7 | 50 | 3 | 1000 | 30 | 4 |
| Example 8 | 50 | 1 | 800 | 26 | 2 |
| Example 9 | 50 | 1 | 800 | 25 | 2 |
| Comparativ e Example 1 | 50 | 1 | 700 | 19 | 2 |
| Comparativ e Example 2 | 50 | 3 | 1200 | 45 | 3.2 |

### Preparation of cathode active material

The metal oxide precursor particles of the examples and comparative examples were pulverized by ball milling to prepare small-sized metal oxide precursor particles having a median particle diameter of 3.5 µm. A mixture was prepared by mixing lithium hydroxide with the metals of the small-sized metal oxide precursor particles at a molar ratio of lithium to metals of 1.03. The mixture was calcined at a temperature of 850 °C for 10 hours to prepare lithium metal oxide particles. However, in Example 9, the lithium metal oxide particles were prepared by calcining at a temperature of 850 °C for 10 hours without introducing lithium hydroxide.

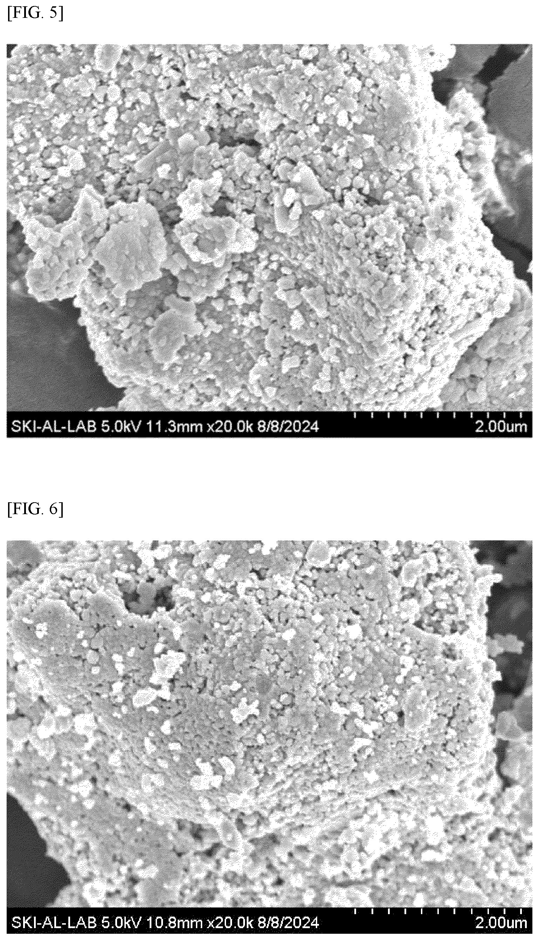

FIGS. 5 to 7 are SEM images of pulverized small-diameter metal oxide precursor particles of Examples 4 and 7, and Comparative Example 1, respectively.

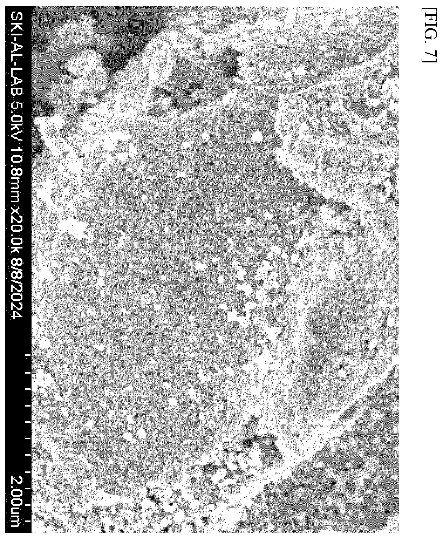

Referring to FIGS. 5 and 6, the primary particles of the lithium metal oxide of Example 7 have a smaller size than those of the lithium metal oxide of Example 4. On the other hand, referring to FIG. 7, in the lithium metal oxide of Comparative Example 1, the primary particles appear excessively agglomerated, which may deteriorate the interaction with lithium ions during battery charging and discharging and result in deteriorated battery performance.

### Manufacture of secondary battery

The lithium metal oxide, carbon black as a conductive material, and PVDF as a binder were mixed in a weight ratio of 93:5:2, and the mixture was dispersed in N-methylpyrrolidone to prepare a slurry. The slurry was applied to one surface of an aluminum current collector (having a thickness of 20 µm), then dried and roll-pressed to prepare a cathode.

A lithium metal foil having a thickness of 1.2 mm was used as the anode.

The cathode and anode were notched to a predetermined size, stacked, and a separator (polyethylene, thickness: 13 µm) was interposed between the cathode and anode. An electrolyte was then injected to prepare a 2016-type coin cell.

As the electrolyte, a solution in which LiPF₆ was dissolved at a concentration of 1 M in a solvent mixture of ethylene carbonate and ethyl methyl carbonate at a volume ratio of 1:1 was used.

### Experimental Example

The properties of the battery were evaluated using the following method, and the results are shown in Table 2 below.

### (1) Evaluation of charge-discharge efficiency

The batteries of the examples and comparative examples were subjected to charging-discharging formation testing (charging conditions: CC-CV 0.1C 4.3V 0.005C CUT-OFF, discharging conditions: CC 0.1C 3.0V CUT-OFF). At this time, the charge capacity and discharge capacity were measured, and the ratio of the discharge capacity to the charge capacity was calculated as the efficiency.

### (2) Evaluation of cycle life properties

Charging and discharging under the same conditions as described in (1) above were regarded as one cycle, and the test was repeated for 100 cycles for the batteries of the examples and comparative examples. After the repetition, the discharge capacity of the batteries was measured, and the ratio relative to the initial discharge capacity measured in (1) was calculated as the capacity retention.

**[TABLE 2]**

| | Charge capacity (mAh/g) | Discharge capacity (mAh/g) | Efficiency (%) | Capacity retention (%) |
|---|---|---|---|---|
| Example 1 | 231.0 | 201.5 | 87.2 | 95 |
| Example 2 | 233.2 | 205.9 | 88.3 | 92 |
| Example 3 | 234.8 | 211.8 | 90.2 | 90 |
| Example 4 | 232.7 | 218.1 | 93.7 | 89 |
| Example 5 | 231.0 | 203.8 | 88.2 | 94 |
| Example 6 | 231.4 | 216.0 | 93.3 | 90 |
| Example 7 | 236.5 | 221.3 | 93.6 | 88 |
| Example 8 | 205.0 | 182.0 | 88.8 | 95 |
| Example 9 | 231.5 | 202.0 | 87.3 | 95 |
| Comparative Example 1 | 230.0 | 190.8 | 82.9 | 75 |
| Comparative Example 2 | 233.1 | 219.5 | 94.2 | 68 |

Referring to Tables 1 and 2, a secondary battery exhibiting improved charge-discharge efficiency was implemented from the metal oxide precursor particles of the examples.

On the other hand, the secondary battery implemented from the metal oxide precursor particles of Comparative Example 1, which had a median particle diameter of less than 20 µm, exhibited reduced efficiency.

The secondary battery implemented from the metal oxide precursor particles of Comparative Example 2, which had a median particle diameter exceeding 40 µm, showed low electrical conductivity, resulting in reduced cycle life properties of the battery.

The contents described above are merely examples of applying the principles of the present disclosure, and other configurations may be further included without departing from the scope of the present disclosure.

## Claims

1. A metal oxide precursor particle having a hollow structure, comprising nickel, cobalt and manganese, and having a median particle diameter of 20 µm to 40 µm.

2. The metal oxide precursor particle according to claim 1, wherein the median particle diameter is 25 µm to 35 µm.

3. The metal oxide precursor particle according to any one of claims 1 and 2, wherein the hollow structure comprises a core that is a void and a shell surrounding an outer surface of the core, and
wherein the shell has an average thickness of 1 µm to 5 µm.

4. The metal oxide precursor particle according to claim 3, wherein the shell surrounds 90% or more of the area of the outer surface of the core.

5. The metal oxide precursor particle according to any one of claims 1 to 4, wherein the particle includes a crystal structure represented by Formula 1 below:
[Formula 1] Ni_{1-x-y-z}CoₓMn_{y}M_{z}O₂₊ₐ
(in Formula 1, 0<x≤0.1, 0<y≤0.2, 0≤z≤0.1, 0.5≤1-x-y-z<1, and -0.1≤a≤0.1, M comprises at least one selected from the group consisting of B, Na, Mg, Ca, Ti, V, Cr, Cu, Zn, Ga, Ge, Sr, Y, Ag, Ba, Zr, Nb, Mo, Al, W, Ru, Sn, Ta, La and C).

6. The metal oxide precursor particle according to any one of claims 1 to 5, wherein the particle may further include lithium.

7. A method for preparing metal oxide precursor particles comprising:
preparing a mixed solution including water and a metal source comprising a nickel source, a cobalt source and a manganese source; and
spraying the mixed solution into a quartz tube,
wherein the quartz tube comprises a particle formation region therein, and
the temperature of the particle formation region is 750 °C to 1100 °C, preferably 800 °C to 1000 °C.

8. The method for preparing metal oxide precursor particles according to claim 7, wherein the concentration of the metal source in the mixed solution is 0.5 M to 4 M.

9. The method for preparing metal oxide precursor particles according to any one of claims 7 and 8, wherein the spraying is performed at a flow rate of the mixed solution of 30 ml/min to 150 ml/min.

10. The method for preparing metal oxide precursor particles according to any one of claims 7 to 9, wherein the metal source in the mixed solution may further include a lithium source.

11. The method for preparing metal oxide precursor particles according to any one of claims 7 to 10, wherein the mixed solution further comprises a chelating agent or a basic compound.

12. A method for preparing a cathode active material comprising:
pulverizing metal oxide precursor particles having a hollow structure, comprising nickel, cobalt and manganese, and having a median particle diameter of 20 µm to 40 µm to prepare small-particle metal oxide precursor particles; and
calcining a mixture comprising the small-particle metal oxide precursor particles and a lithium source to prepare lithium metal oxide particles.

13. The method for preparing a cathode active material according to claim 12, wherein the small-sized metal oxide precursor particles have a median particle diameter of 1 µm to 10 µm.

14. The method for preparing a cathode active material according to any one of claims 12 and 13, wherein the calcination is performed at a temperature of 700 °C to 1000 °C.

15. The method for preparing a cathode active material according to any one of claims 12 to 14, wherein the lithium metal oxide particles have a single-particle structure.
